(19) Europäisches Patentamt
European Patent Office
Office européen des brevets

(11) Numéro de publication : **0 360 946 B1**

# FASCICULE DE BREVET EUROPEEN

(12)

(45) Date de publication du fascicule du brevet :
**02.01.92 Bulletin 92/01**

(51) Int. Cl.$^5$ : **F16L 17/04, F16L 25/02**

(21) Numéro de dépôt : **88402660.0**

(22) Date de dépôt : **21.10.88**

(54) Raccord pour tubes lisses.

(30) Priorité : **09.09.88 FR 8811810**

(43) Date de publication de la demande :
**04.04.90 Bulletin 90/14**

(45) Mention de la délivrance du brevet :
**02.01.92 Bulletin 92/01**

(84) Etats contractants désignés :
**AT BE CH DE ES GB GR IT LI LU NL SE**

(56) Documents cités :
**DE-A- 3 443 943**
**DE-B- 1 216 627**

(56) Documents cités :
**DE-C- 3 710 852**
**DE-C- 3 710 852**
**FR-A- 2 359 355**
**US-A- 2 269 695**

(73) Titulaire : **Levivier, Yves**
**6, rue David Desvachez**
**Valenciennes (Nord) (FR)**

(72) Inventeur : **Levivier, Yves**
**6, rue David Desvachez**
**Valenciennes (Nord) (FR)**

(74) Mandataire : **Cabinet Pierre HERRBURGER**
**115, Boulevard Haussmann**
**F-75008 Paris (FR)**

EP 0 360 946 B1

## Description

L'invention concerne un raccord pour tubes lisses recevant un fluide sous pression, raccord fixé sur l'extrémité de deux tubes par un serrage, sans soudure ni vissage, ce raccord comprenant un manchon extérieur formant une chambre recevant un joint d'étanchéité en forme de tube terminé à chaque extrémité par une lèvre venant s'appliquer de manière étanche contre l'extrémité correspondante de tube engagé dans le raccord, sous l'effet de la pression du fluide circulant dans les tubes, des bagues à grippes logées dans le manchon pour s'agripper contre les tubes, un moyen de serrage du manchon pour bloquer le raccord sur les tubes.

Un tel raccord est connu sous différentes réalisations et il est en particulier décrit aux brevets FR-A-2359354 et FR-A-2359355.

Les raccords connus de ce type comportent un manchon extérieur formant une chambre qui reçoit un joint d'étanchéité en forme de tube terminé à chaque extrémité par une lèvre venant s'appliquer de manière étanche contre une extrémité de tube et sous l'effet des ressorts internes et de la pression du fluide circulant dans les tubes. Au niveau de l'extrémité, il est prévu chaque fois une bague à grippes s'appuyant contre le manchon et dont les grippes viennent dans l'extrémité correspondante des deux tubes à raccorder, les grippes des deux bagues agissant en sens opposé. Ainsi, sous l'effet de la dilatation l'extrémité du tube ne peut que pénétrer dans le raccord, alors que le mouvement inverse est interdit par les grippes. De tels raccords sont intéressants car ils permettent de raccorder facilement et de manière démontable des tubes, mais l'un de leurs inconvénients réside dans le fait qu'ils ne permettent pas d'absorber les effets de de la dilatation des tubes si bien qu'il faut des éléments de dilatation sur les tuyauteries.

De plus, de tels raccords ne sont pas suffisamment fiables pour certaines tuyauteries par exemple les tuyauteries d'alimentation en eau des dispositifs de protection contre le feu.

Dans ce dernier cas les tuyaux sont réunis par des bagues venant s'accrocher dans une gorge usinée à chaque extrémité des tuyaux à raccorder. Or, cette solution est onéreuse à cause de l'usinage des gorges et présente en outre l'inconvénient d'affaiblir les tuyaux ou de nécessiter des tubes plus épais.

On connaît également un raccord (DE-C-3710852) composé d'un manchon extérieur formant une chambre recevant un joint d'étanchéité lui-même en forme de manchon élastique terminé de chaque côté par une lèvre venant s'appliquer de manière étanche contre une extrémité correspondante du tube, en complément de la partie centrale de ce manchon d'étanchéité, partie centrale qui est elle-même appliquée sous pression exercée par le manchon extérieur contre les extrémités proximales des deux tubes à réunir.

Le manchon extérieur comporte à chaque extrémité des logements pour recevoir des bagues à grippes venant s'agripper contre chaque extrémité des deux tubes à réunir. Enfin, le manchon extérieur est appliqué contre les deux tubes à réunir par un collier de serrage prévu à chaque extrémité du manchon, au droit des bagues à grippes.

Ce raccord connu, destiné à être fixe solidairement à l'extrémité de chacun des deux tubes à réunir pour assurer une liaison résistant à des contraintes de traction, de pression ou de flexion élevées. Il n'est pas question d'absorber des contraintes de dilatation et, d'ailleurs, la solidarisation du raccord sur chaque extrémité des deux tubes ne le permettrait nullement.

On connaît également (DE-A-3443943) un mode de réalisation qui constitue une variante du raccord déjà examiné ci-dessus ; ce raccord se compose d'un manchon extérieur en deux parties réunies par des vis, délimitant une chambre recevant un joint d'étanchéité en forme de manchon élastique terminé de chaque côté par une lèvre venant s'appliquer de manière étanche contre une extrémité correspondante du tube. Le manchon extérieur comporte également deux rainures recevant des bagues à grippes qui permettent de bloquer le manchon sur les deux extrémités des tubes à réunir. Il s'agit là encore d'une liaison rigide entre le raccord et les deux extrémités de tube ; cette liaison ne permet pas d'absorber les efforts de dilatation.

La présente invention a pour but de remédier aux inconvénients des solutions connues et se propose de créer un raccord de fabrication et de montage simples et permettant d'absorber les effets de dilatation des tubes sans nécessiter de joint de dilatation.

A cet effet, l'invention concerne un raccord du type ci-dessus caractérisé selon la partie caractérisante de la revendication 1 en ce que l'une des extrémités du manchon est munie d'un logement périphérique recevant un moyen de blocage pour fixer le raccord solidairement sur une extrémité seulement de l'un des tubes à raccorder, l'extrémité de l'autre tube pouvant coulisser librement dans le manchon en étant seulement en contact avec la lèvre correspondante du joint.

Comme l'une des extrémités du manchon extérieur du raccord comporte les bagues à grippes agissant dans des directions opposées, on a ainsi un point fixe formé par un accrochage solidaire, mais démontable du raccord sur l'extrémité de l'un des tubes, alors que l'extrémité de l'autre tube pénètre librement dans le raccord en n'étant soumise qu'à l'action de la lèvre d'étanchéité du manchon. Cette lèvre permet, quelle que soit la pression du fluide de la conduite, le coulissement axial de l'extrémité du tube correspondant et par suite la prise en compte des phénomènes de dilatation et de contraction sous l'effet des variations de température environnante ou du fluide circulant dans les tubes.

De plus, les raccords permettent d'absorber les défauts d'alignement des tubes raccordés.

Grâce à sa simplicité, sans que cela ne soit au détriment de l'efficacité, le raccord selon l'invention est très léger et peu encombrant ce qui est avantageux voire déterminant dans de nombreuses applications.

De façon particulièrement avantageuse le manchon est en forme de deux coquilles réunies par les boulons.

Suivant une autre caractéristique, le logement présente des surfaces d'appui pour soutenir des bagues à grippes dans des positions inclinées pour exercer une action opposée.

Suivant une autre caractéristique, les surfaces d'appui du logement périphérique sont constituées par les parois du logement à section trapézoïdale.

Suivant une autre caractéristique, les deux bagues à grippes de chaque logement sont séparées dans le logement par un jonc de section circulaire ou trapézoïdale.

En résumé, le joint selon l'invention tient aux vibrations et à des pressions allant jusqu'à 40 bars. Son encombrement est extrêmement faible. Dimensionné de manière appropriée, il s'utilise sur n'importe quelle tuyauterie et son installation est très rapide. Elle ne nécessite pas de préparation des extrémités des tubes et permet également d'absorber un certain décalage angulaire ou en parallaxe de l'extrémité des tubes.

La présente invention sera décrite de manière plus détaillée à l'aide des dessins annexés, dans lesquels :

— la figure 1 est une vue en coupe de deux extrémités de tubes réunies par un raccord selon l'invention ;

— la figure 2 est une vue en coupe axiale d'un exemple de réalisation du manchon extérieur en deux parties à la manière d'un collier.

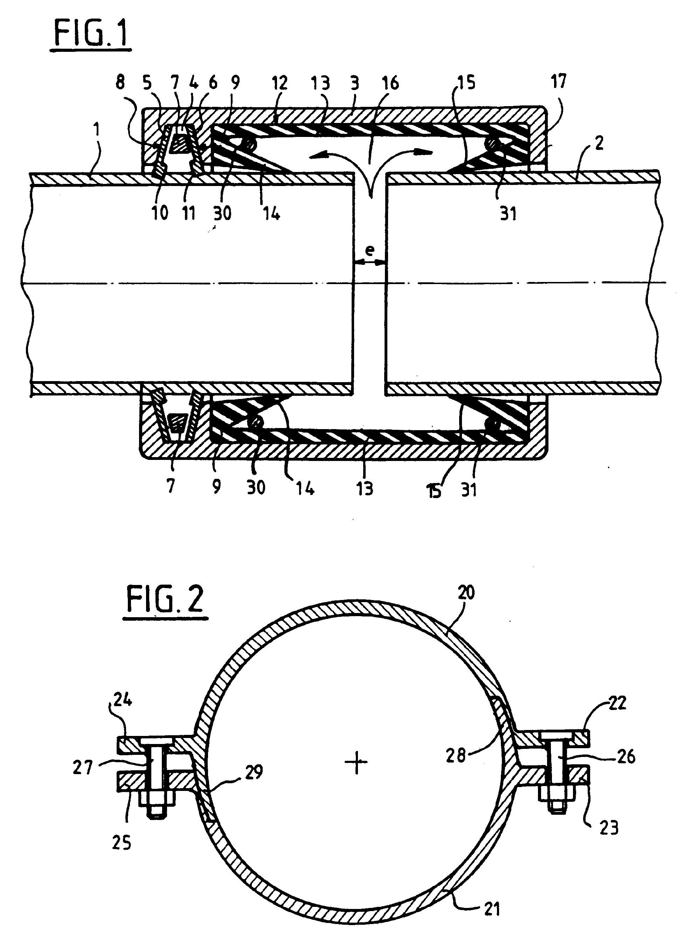

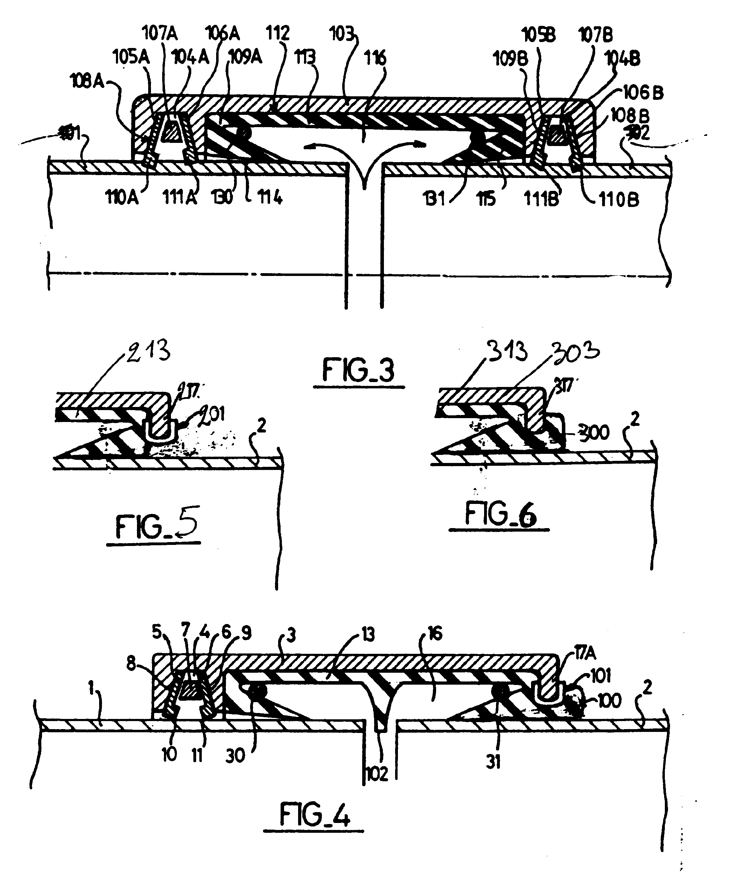

Selon la figure 1, un raccord de l'invention est destiné à réunir deux extrémités 1 et 2 de deux tubes. Intentionnellement les extrémités des deux tubes 1, 2 ne sont pas représentées jointives, mais écartées d'une distance e, variable en fonction par exemple de la dilatation ou de la contraction des tubes.

Ce raccord se compose d'un manchon extérieur 3 terminé à l'une de ses extrémités, par exemple l'extrémité gauche, par un logement périphérique 4 recevant deux bagues à grippes, ouvertes 5 et 6. Dans ce mode de réalisation, les deux bagues sont séparées par un jonc ouvert 7 de section trapézoïdale ou circulaire, les parois 8 et 9 du logement périphérique 4 étant elles-mêmes inclinées, la section du logement étant trapézoïdale.

Ainsi les bagues 5 et 6 sont maintenues au montage, dans une position inclinée, opposée. Grâce au jonc ouvert 7, contre les parois 8 et 9.

De manière générale les parois inclinées du logement périphérique 4 forment des surfaces d'appui pour les bagues à grippes ; en d'autres termes, les parois du logement périphérique pourraient avoir une forme différente de celle ci-dessus à condition de former des surfaces d'appui maintenant les bagues à grippes dans la position inclinée comme indiqué ci-dessus.

Ainsi, dans certains cas, la section du logement peut être en forme de triangle, de polygone ou encore de forme courbe, sans que de telles formes ne soient limitatives.

Pour permettre le serrage sur le tube ces bagues ouvertes se terminent à leur partie inférieure par des arêtes 10, 11, vives formant des grippes. Ces arêtes sont destinées à venir s'enfoncer dans la paroi de l'extrémité du tube 1 lors du serrage axial du manchon 3.

A côté du logement périphérique 4, le manchon extérieur 3 est muni d'un logement périphérique 12 d'une certaine longueur axiale contenant un joint 13 formé d'un manchon élastique terminé à chaque extrémité par des lèvres 14, 15. Les lèvres 14, 15 s'appuient l'une sur l'extrémité du tube 1, l'autre sur l'extrémité du tube 2. A l'intérieur de ce joint, il y a une cavité 16 dans laquelle arrive le fluide sous pression circulant dans les tubes 1, 2. La pression applique le manchon élastique et les lèvres 14, 15 du joint 13 contre le manchon 3, et contre les extrémités des tubes 1, 2 assurant ainsi l'étanchéité. Le cas échéant on a de manière complémentaire des ressorts 30, 31.

En partie droite selon la figure 1, le manchon extérieur 3 est terminé par un retour 17 qui sert d'appui à la partie droite du joint 13, le contour du logement annulaire 4 servant d'appui à gauche pour le joint 13.

Comme ce raccord n'a qu'un point (ou double ligne périphérique) d'accrochage solidaire par exemple sur le tube 1, l'extrémité du raccord située au niveau du tube 2 n'assure qu'une fonction d'étanchéité mais non une fonction de blocage. Les tubes 1, 2 peuvent donc se rapprocher ou s'écarter en fonction des dilatations ou contractions, engendrées par les variations de température du fluide ou de la température environnante.

Ainsi, le raccord assure non seulement de manière simple l'étanchéité entre deux extrémités de tubes, mais il permet également d'absorber les dilatations.

Selon l'invention, le manchon 3, les bagues à grippes 8, 9 et le jonc 7 sont des organes périphériques, ouverts, c'est-à-dire non continus de façon à permettre la compression radiale du manchon 3 par exemple par des boulons, pour assurer l'enfoncement des bagues à grippes 8, 9 dans l'extrémité 1 du tube et par suite le blocage du raccord sur cette extrémité de tube.

La figure 2 montre en coupe une variante de réalisation du manchon extérieur. Ce manchon est constitué de deux parties 20, 21 terminées à chaque extrémité par des pattes 22, 23 et 24, 25 réunies par des boulons 26, 27. Pour éviter que le joint élastique ne puisse venir dans l'intervalle des pattes 22, 23 et 24, 25 des deux parties du manchon extérieur, chaque partie 20, 21 se termine par une surface de guidage 28, 29 coopérant avec des surfaces de guidage correspondantes non représentées de l'autre partie pour assurer une certaine continuité à la jonction des deux parties 20, 21 fermant l'intervalle entre les pattes 22, 23 et 24, 25.

Toutefois, d'autres modes de réalisation du manchon extérieur sont envisageables. Ce manchon peut également être réalisé en deux parties articulées l'une à l'autre par une charnière et dont les autres extrémités sont réunies par des boulons de serrage.

Enfin, il convient de souligner que le raccord une fois mis en place peut être enrobé d'une résine.

De manière générale, dans les modes de réalisation ci-dessus et surtout dans le cas des diamètres importants, le manchon 3 peut être réalisé en plus de deux parties assemblées les unes aux autres à la manière de l'assemblage de la figure 2.

Il est à remarquer que le raccord selon l'invention est d'une construction particulièrement simple et légère. Suivant sa longueur et son mode de réalisation, le raccord sera fixé par deux ou quatre boulons.

## Revendications

1. Raccord pour tubes lisses recevant un fluide sous pression, raccord fixé sur l'extrémité de deux tubes par un serrage, sans soudure ni vissage, raccord comprenant :

— un manchon extérieur formant une chambre recevant un joint d'étanchéité en forme de manchon élastique terminé de chaque côté par une lèvre venant s'appliquer de manière étanche contre une extrémité correspondante de tube, engagé dans le raccord sous l'effet de la pression du fluide circulant dans les tubes,

— des bagues à grippes logées dans le manchon pour s'agripper contre les tubes,

— un moyen de serrage du manchon pour bloquer le raccord sur les tubes, raccord caractérisé en ce que :

— une seule des extrémités du manchon (3) est munie d'un logement périphérique (4) recevant deux bagues à grippes à action opposée (8, 9) pour bloquer le raccord solidairement sur une extrémité (1) seulement de l'un des tubes à raccorder,

— l'extrémité de l'autre tube (2) pouvant coulisser librement dans le manchon (3) en étant seulement en contact avec la lèvre (15) correspondante du joint (13).

2. Raccord selon la revendication 1, caractérisé en ce que le manchon est en forme de deux coquilles (20, 21) réunies par des boulons (26, 27).

3. Raccord selon la revendication 1, caractérisé en ce que le logement périphérique (4) a une section trapézoïdale.

## Patentansprüche

1. Rohrverbindung für glatte Rohre, welche Flüssigkeit unter Druck in sich aufnehmen, wobei die Rohrverbindung ohne Schweißen und ohne Verschrauben befestigt ist, wobei die Rohrverbindung enthält :

— eine äußere Muffe, welche eine Dichtung in Form einer elastischen Muffe in sich aufnimmt, welche an jeder Seite mit einer Lippe abschließt, welche jeweils in abdichtender Weise gegen ein korrespondierend äußeres Ende eines Rohres angepaßt ist, welche mit Wirkung des Drucks der in den Rohren fließenden Flüssigkeit in der Rohrverbindung steckt,

— in der Muffe untergebrachte Klemmringe zum Anklammern gegen die Rohre,

— ein Mittel zum Zusammenziehen der Muffe, um die Rohrverbindung auf den Rohren zu fesseln, dadurch gekennzeichnet, daß

— eines der äußeren Enden der Muffe (3) mit einer umgebenden Lagerung (4) versehen ist, welche zwei in Gegenrichtung wirkende Klemmringe (8, 9) in sich aufnimmt, um die Rohrverbindung fest auf einem äußeren Ende (1) lediglich eines der zu verbindenden Rohre zu fesseln,

— das äußere Ende des anderen Rohres (2) frei in die Muffe (3) gleiten kann, lediglich in Kontakt der zur Dichtung (13) zugehörigen Lippe (15).

2. Rohrverbindung gemäß Anspruch 1, dadurch gekennzeichnet, daß die Muffe von zwei Schalen (20, 21) gebildet ist, welche mittels Schrauben (26, 27) verbunden sind.

3. Rohrverbindung gemäß Anspruch 1, dadurch gekennzeichnet, daß die umgebende Lagerung (4) trapezförmigen Querschnitt aufweist.

## Claims

1. Coupling for smooth pipes containing a fluid under pressure, a coupling fixed to the ends of two pipes by clamping, without welding or bolting, a coupling comprising :

— an outer sleeve forming a chamber containing a sealing joint in the form of an elastic sleeve terminating on each side in a lip pressed sealingly against a corresponding end of a pipe, engaged in the coupling under the effect of the pressure of the fluid passing through the pipes,

— rings with grippers housed in the sleeve to grip against the pipes,

— a means of clamping the sleeve in order to lock the coupling on the pipes,

coupling characterised in that :

— one only of the ends of the sleeve (3) is provided with a peripheral housing (4) accommodating two rings with grippers with opposite actions (8, 9) in order to lock the coupling securely on one end (1) only of one of the pipes to be connected,

— the end of the other pipe (2) being able to slide freely in the sleeve (3) whilst being solely in contact with the corresponding lip (15) of the joint (13).

2. Coupling according to claim 1, characterised in that the sleeve is in the form of two shells (20, 21) joined by bolts (26, 27).

3. Coupling according to claim 1, characterised in that the peripheral housing (4) has a trapezoidal cross section.

## FIG.1

## FIG.2

FIG_3

FIG_5

FIG_6

FIG_4